# EUROPEAN PATENT APPLICATION

(11) **EP 4 776 581 A1**
(43) Date of publication of application: **15.07.2026**
(21) Application number: 26305040.3
(22) Date of filing: 12.01.2026
(51) Int. Cl.: H04L 12/403, H04L 12/40

(54) **METHOD, APPARATUS, SYSTEM, DEVICE AND STORAGE MEDIUM FOR DATA TRANSMISSION**

(30) Priority: 14.01.2025 CN 202510055692
(71) Applicant: SCHNEIDER ELECTRIC INDUSTRIES SAS, 92500 Rueil-Malmaison (FR)
(72) Inventor: TANG, Yongqiang, SHANGHAI, 201203 (CN); ZHANG, Haijun, SHANGHAI, 201203 (CN); HU, Zejun, SHANGHAI, 201203 (CN); LIU, Zitong, SHANGHAI, 201203 (CN); HEI, Minglei, SHANGHAI, 201203 (CN)
(74) Representative: Plasseraud IP

(57) **Abstract**

Embodiments of the present disclosure provide a method (400), an apparatus (500), a system, a device (600) and a storage medium for data transmission. The method (400) includes: determining (410), in response to receiving a request for application data from a client, a transmission cycle for transmitting the application data; sending (420), via a master device, first process data object information to a plurality of slave devices within a first time window of the transmission cycle, the first process data object information indicating a control operation of the master device for the plurality of slave devices; sending (430), via the master device, synchronization information to the plurality of slave devices within a second time window of the transmission cycle, to enable the plurality of slave devices to send second process data object information to the master device, the second process data object information at least indicating a response of the plurality of slave devices to the control operation; and transmitting (440) the application data to the client to respond to the request within at least one time window of the transmission cycle other than the first time window and the second time window.

## Description

### FIELD

Example embodiments of the present disclosure generally relate to the field of electrical devices, and in particular, to a method, an apparatus, a system, a device and a storage medium for data transmission.

### BACKGROUND

Currently, an application developed based on a CANopen protocol stack of a controller area network (CAN) bus generally may directly call an interface provided by the CANopen protocol stack to implement various service functions. However, various types of service messages requested by the application lack control and management, so that messages may not be sent in time, transmission of various types of data is prone to collision, and an arrival time of data becomes random and uncontrollable. In the case that a cache space of the protocol stack is insufficient, the data required by the current service may even be discarded.

In addition, there are various types of arbitration in the CAN communication system, and the phenomena such as data disorder, data congestion and the like are more easily generated when the data volume is large or the number of devices is large, so that data of an application cannot be effectively controlled, and return of data interaction is not controllable, affecting the normal interaction of the application data.

### SUMMARY

An object of the present disclosure is to provide a solution for data transmission to at least partially solve the above problems and other potential problems.

In a first aspect of the present disclosure, a method of data transmission is provided. The method includes: determining, in response to receiving a request for application data from a client, a transmission cycle for transmitting the application data; sending, via a master device, first process data object information to a plurality of slave devices within a first time window of the transmission cycle, the first process data object information indicating a control operation of the master device for the plurality of slave devices; sending, via the master device, synchronization information to the plurality of slave devices within a second time window of the transmission cycle, to enable the plurality of slave devices to send second process data object information to the master device, the second process data object information at least indicating a response of the plurality of slave devices to the control operation; and transmitting the application data to the client to respond to the request within at least one time window of the transmission cycle other than the first time window and the second time window.

In a second aspect of the present disclosure, an apparatus for data transmission is provided. The apparatus includes: a transmission cycle determination module configured to determine, in response to receiving a request for application data from a client, a transmission cycle for transmitting the application data; a first information sending module configured to send, via a master device, first process data object information to a plurality of slave devices within a first time window of the transmission cycle, the first process data object information indicating a control operation of the master device for the plurality of slave devices; a second information sending module configured to send, via the master device, synchronization information to the plurality of slave devices within a second time window of the transmission cycle, to enable the plurality of slave devices to send second process data object information to the master device, the second process data object information at least indicating a response of the plurality of slave devices to the control operation; and an application data transmission module configured to transmit the application data to the client to respond to the request within at least one time window of the transmission cycle other than the first time window and the second time window.

In a third aspect of the present disclosure, a system for data transmission is provided. The system includes: a master device; a plurality of slave devices; and a processor and a memory storing computer-executable instructions that, when executed by the processor, cause the system to perform the method according to the first aspect of the present disclosure.

In a fourth aspect of the present disclosure, an electronic device is provided. The electronic device includes at least one processing unit; and at least one memory coupled to the at least one processing unit and storing instructions for execution by the at least one processing unit, the instructions, when executed by the at least one processing unit, causing the electronic device to perform the method of the first aspect of the present disclosure.

In a fifth aspect of the present disclosure, a computer-readable storage medium is provided. The computer-readable storage medium has stored a computer program thereon, and the computer program is executable by a processor to perform the method according to the first aspect of the present disclosure.

It should be understood that the content described in this summary section is not intended to limit the key features or major features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 illustrates a schematic diagram of a system for data transmission according to some embodiments of the present disclosure;
FIG. 2 illustrates a schematic diagram of classifying and storing application data according to some embodiments of the present disclosure;
FIG. 3 illustrates a schematic diagram of data transmission between a master device and a plurality of slave devices according to some embodiments of the present disclosure;
FIG. 4 illustrates a flowchart of a process of data transmission according to some embodiments of the present disclosure;
FIG. 5 illustrates a block diagram of an apparatus for data transmission according to some embodiments of the present disclosure; and
FIG. 6 illustrates a block diagram of an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as being limited to the embodiments set forth herein. Rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "including" and the like should be understood as an open-ended inclusion, i.e., "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

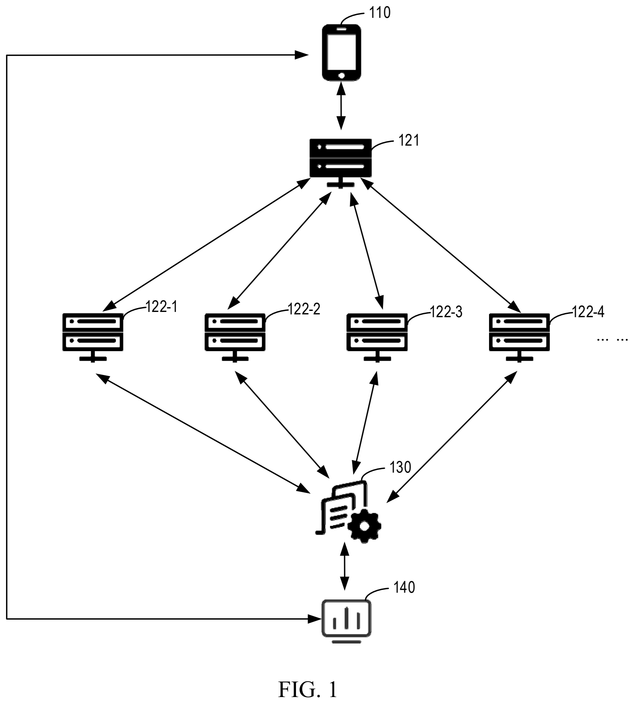

FIG. 1 illustrates a schematic diagram of a system for data transmission according to some embodiments of the present disclosure. As shown in FIG. 1, the system for data transmission described herein generally includes a client device 110, a master device 121, a plurality of slave devices 122-1, 122-2, 122-3, 122-4, a protocol stack 130, and a bus 140. It should be noted that the present disclosure is not limited to modules involved in the system, for example, adding or replacing the modules in the figure to achieve similar purpose should be regarded as being included within the scope of the present disclosure.

In an embodiment of the present disclosure, the client device 110, the master device 121, and the bus 140 are communicatively connected. The client device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an e-book device, a gaming device, or any combination of the foregoing, including accessories and peripherals of these devices, or any combination thereof. The master device 121 and the plurality of slave devices 122-1, 122-2, 122-3, 122-4 may be various types of computing systems/electronic devices capable of providing computing power, including, but not limited to, a mainframe, an edge computing node, a computing device in a cloud environment, and the like. It should be understood that the device type and the device quantity of the foregoing device may be determined according to actual situations, which is not limited in the present disclosure.

As shown in FIG. 1, the master device 121 may receive a request for application data from the client device 110. The plurality of slave devices 122-1, 122-2, 122-3, 122-4 may cache the application data under control of the master device 121 and hand over the application data to the protocol stack 130. The protocol stack 130 is capable of determining a priority of transmission based on a protocol type of the application data to transmit the application data to the client 110 in order through the bus 140.

As described above, an application currently developed based on a CANopen protocol stack may generally directly call an interface provided by the CANopen protocol stack to implement various service functions. However, various types of service messages requested by the application lack control and management, so that messages may not be sent in time, transmission of various types of data is prone to collision, and an arrival time of data becomes random and uncontrollable. In the case that a cache space of the protocol stack is insufficient, the data required by the current service may even be discarded.

In addition, there are various types of arbitration in the CAN communication system, and the phenomena such as data disorder, data congestion and the like are more easily generated when the data volume is large or the number of devices is large, so that data of an application cannot be effectively controlled, and return of data interaction is not controllable, affecting the normal interaction of the application data.

If transmission of the application data relies entirely on the protocol stack, collisions and confusions of various types of data easily occur on the bus. For example, in a case where the master device needs to query information of a single slave device by sending a service data object (SDO), other slave devices on the bus constantly report the process data object (PDO), and since the PDO has a higher priority on the CAN bus than the SDO, the sending of the SDO may be delayed, which affects the real-time performance of the application data transmission.

To this end, embodiments of the present disclosure provide a solution for data transmission. In this solution, in response to receiving a request for application data from a client, a transmission cycle for transmitting the application data is determined. Within a first time window of the transmission cycle, first process data object information is sent to a plurality of slave devices via a master device, and the first process data object information indicates a control operation of the master device for the plurality of slave devices. Then, within a second time window of the transmission cycle, synchronization information is sent to the plurality of slave devices via the master device, to enable the plurality of slave devices to send second process data object information to the master device, and the second process data object information at least indicates a response of the plurality of slave devices to the control operation. The application data is transmitted to the client to respond to the request within at least one time window of the transmission cycle other than the first time window and the second time window.

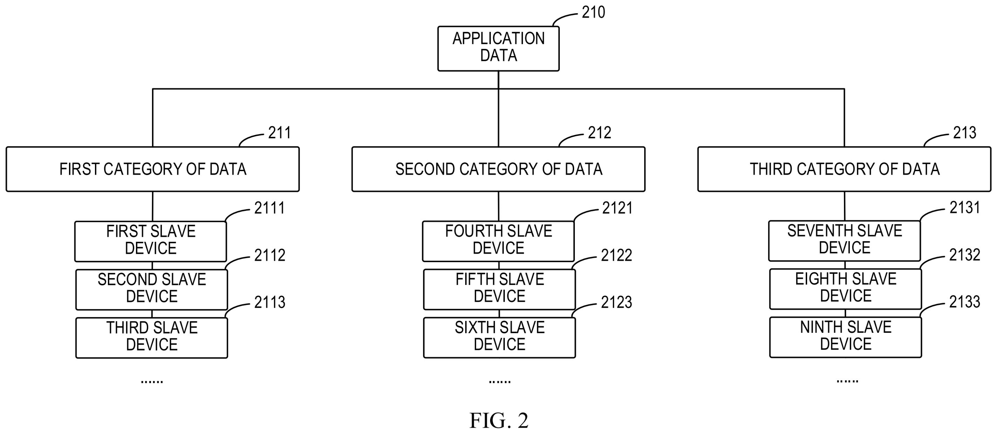

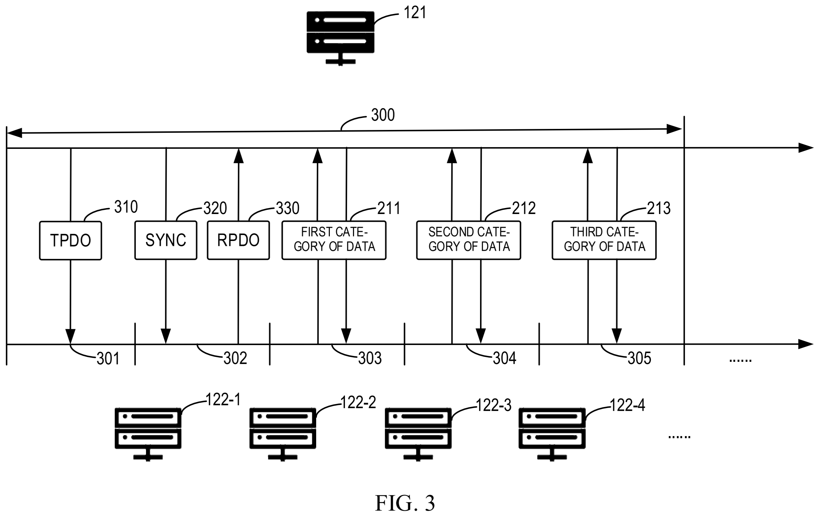

In this way, management and transmission of the messages can be performed, confusion and congestion during data transmission can be effectively avoided, and reliability of the service system can be improved. According to the solution of data transmission provided by the embodiments of the present disclosure, the application data can be classified and stored, then the transmission cycle is determined based on the priority of the application data, data interaction is orderly performed within a plurality of time windows of the transmission cycle, and the data transmission can be throttled using token bucket algorithm, ensuring the transmission of the application data to be controllable throughout the entire process. The specific process will be described in detail below with reference to FIGS. 2 and 3.

FIG. 2 illustrates a schematic diagram of classifying and storing application data according to some embodiments of the present disclosure. According to an embodiment of the present disclosure, as shown in FIGS. 1 and 2, if the master device 121 receives a request for application data 210 from the client 110, the master device 121 may divide the requested application data 210 into a plurality of categories of data, such as a first category 211, a second category 212, a third category 213, and the like. Transmission priorities of the plurality of categories of data are different from each other. It should be understood that the application data 210 may be divided into any number of categories of data, which is not limited in the present disclosure.

In some embodiments, as shown in FIG. 2, each category of data may be stored in a queue based on a device identifier of corresponding at least one slave device. For example, the first category of data 211 may be stored by a queue formed by slave devices such as a first slave device 2111, a second slave device 2112, a third slave device 2113, or the like. Similarly, the second category of data 212 may be stored by a queue formed by slave devices such as a fourth slave device 2121, a fifth slave device 2122, a sixth slave device 2123, or the like, and the third category of data 213 may be stored by a queue formed by slave devices such as a seventh slave device 2131, an eighth slave device 2132, and a ninth slave device 2133. The number or value of the above devices is merely an example, and those skilled in the art may use any suitable number of master devices and slave devices to classify and store the application data.

In some embodiments, the master device 121 and the plurality of slave devices employ a quality of service (QoS) management system to manage the application data 210. With an interface with the client 110 provided by the QoS system, it may be determined whether a plurality of slave devices corresponding to the application data 210 are in a startup state (that is, whether the device is online), so as to enqueue the classified data application into a queue formed by the corresponding at least one slave device, serving as a first-level cache. Controlling the plurality of slave devices by the master device 121 to classify and store the application data 210 can make the management for the application data 210 simpler and more efficient.

FIG. 3 illustrates a schematic diagram of data transmission between a master device and a plurality of slave devices according to some embodiments of the present disclosure. In some embodiments, as shown in FIGS. 1-3, in response to receiving a request for the application data 210 from the client 110, the master device 121 may determine a transmission cycle 300 for transmitting the application data 210. The transmission cycle 300 includes a plurality of time windows for data interaction in a fixed time order.

In some embodiments, first process data object (TPDO) information 310 is sent via the master device 121 to the plurality of slave devices within a first time window 301 of the transmission cycle 300. The sent TPDO information 310 may indicate a control operation, such as a switching operation, of the master device 121 for a plurality of slave devices.

In some embodiments, within a second time window 302 of the transmission cycle 300, synchronization (SYNC) information 320 is sent via the master device 121 to the plurality of slave devices to enable the plurality of slave devices to send second process data object (RPDO) information to the master device 121. The RPDO information may indicate a response of the plurality of slave devices to the control operation. By sending the PDO information in an earlier time window within the transmission cycle 300, the control relationship between the master device 121 and the plurality of slave devices can be quickly determined, facilitating control and management.

In some embodiments, the application data 210 may be transmitted to the client 110 to respond to the request within at least one time window of the transmission cycle 300 other than the first time window 301 and the second time window 302. For example, data interaction of the first category of data 211 may be performed within a third time window 303, data interaction of the second category of data 212 may be performed within a fourth time window 304, and data interaction of the third category of data 213 may be performed within a fifth time window 305. After all categories of data in the application data 210 have been interacted with, the master device 121 and the plurality of slave devices may enter the next transmission cycle 300, and this process can be repeated continuously.

In some embodiments, in a process of performing data interaction between the master device 121 and the plurality of slave devices, a QoS system may be used to determine whether a protocol stack corresponding to a certain category of data of the plurality of categories of data is idle. In a case that the protocol stack corresponding to the category of data is idle and a service may be provided, transmission work of the category of data may be performed within the time window corresponding to the category of data.

In some embodiments, in order to limit the traffic of data interaction and reduce the workload of the service system, retrieval and transmission of data may be performed using a token bucket algorithm. In particular, a token bucket may generate a predetermined number of tokens in a predetermined cycle for transmission of the application data 210. Each category of data in the application data 210 is allocated with a set of tokens for transmission of the category of data. The number of tokens in the allocated set of tokens is related to the transmission priority of the category of data.

For example, when the first category of data 211 of the plurality of categories of data needs to be transmitted in the third time window 303, it is necessary to request to obtain a token. After receiving the request, the token bucket may release a set of tokens for transmission of the first category of data 211. In a case of the number of tokens in the set of tokens is sufficient and the protocol stack corresponding to the first category of data 211 is idle, the first category of data 211 may be retrieved from the corresponding queue for transmission within the third time window 303. During data transmission, some data in the first category of data 211 needs to be transmitted, and some tokens in the set of tokens are used until the first category of data 211 has been entirely transmitted. Similarly, transmission of other categories of data is the same as that in the foregoing process, and details are not described herein again.

The transmission of the application data 210 is optimized through the token bucket algorithm, so that transmission of each category of data can be more well-ordered. This can reduce the operating pressure of the service system, effectively avoiding data congestion.

In some embodiments, the application data 210 may be transmitted by the QoS system using an interface between the protocol stack 130 and the plurality of slave devices. Since the application data 210 received by the protocol stack 130 is data after managed and controlled, and the data has a predefined transmission priority, there is no need for the protocol stack 130 to perform excessive processing on the application data 210, and it only needs to call back a transmission result of the application data 210 to notify the client 110 through the bus 140. The workload of the protocol stack 130 can be greatly reduced, and data collision and data disorder can be prevented. In addition, since the QoS system is in a service layer of the CANopen protocol stack, rather than a data sending level, it can be compatible with various package mechanisms.

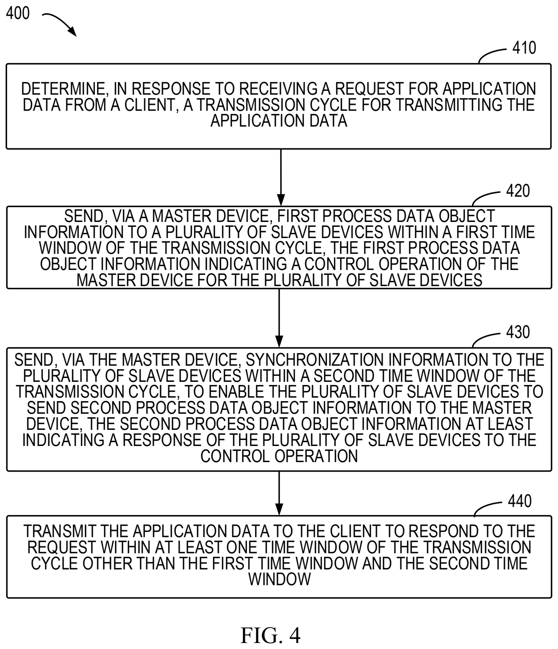

FIG. 4 illustrates a flowchart of a process 400 of data transmission according to some embodiments of the present disclosure. The process 400 may be implemented at the master device 121 as shown in FIG. 1.

At block 410, in response to receiving a request for application data from a client, a transmission cycle for transmitting the application data is determined.

At block 420, within a first time window of the transmission cycle, first process data object information is sent via a master device to a plurality of slave devices, and the first process data object information indicates a control operation of the master device for the plurality of slave devices.

At block 430, within a second time window of the transmission cycle, synchronization information is sent via the master device to the plurality of slave devices, to enable the plurality of slave devices to send second process data object information to the master device, and the second process data object information at least indicates a response of the plurality of slave devices to the control operation.

At block 440, the application data is transmitted to the client to respond to the request within at least one time window of the transmission cycle other than the first time window and the second time window. In some embodiments, the process 400 further includes: dividing the requested application data into a plurality of categories of data, where transmission priorities of the plurality of categories of data are different from each other, and the at least one time window includes a plurality of time windows respectively corresponding to the plurality of categories of data. Transmitting the application data to the client includes: transmitting, to the client, a category of data corresponding to a time window of the plurality of time windows within the time window. In some embodiments, dividing the requested application data into the plurality of categories of data includes: determining whether the plurality of slave devices are in a startup state; and in response to the plurality of slave devices being in the startup state, dividing the application data into the plurality of categories of data, each of the plurality of categories of data being stored by at least one slave device of the plurality of slave devices.

In some embodiments, the process 400 further includes: storing each category of data of the plurality of categories of data, each category of data being stored in a queue based on a device identifier of corresponding at least one slave device; for each category of data, generating a queue for the category of data based on the device identifier of the at least one slave device corresponding to the category of data, to obtain a plurality of queues respectively corresponding to the plurality of categories of data. Transmitting the application data includes: retrieving the plurality of categories of data from the plurality of queues in sequence based on predetermined transmission priorities; and transmitting the data corresponding to each time window within the plurality of time windows in sequence.

In some embodiments, retrieving the plurality of categories of data from the plurality of queues includes: determining whether a protocol stack corresponding to a first category of data of the plurality of categories of data is idle; determining whether a number of a set of tokens allocated to the first category of data for data transmission is sufficient to transmit the first category of data; and in response to the protocol stack corresponding to the first category of data being idle and the number of the set of tokens being sufficient, retrieving the first category of data from a queue corresponding to the first category of data among the plurality of queues.

In some embodiments, retrieving the first category of data from the queue corresponding to the first category of data among the plurality of queues includes: allocating the set of tokens to the first category of data; and retrieving, using a plurality of tokens in the set of tokens, first data of the first category of data from a first slave device of the at least one slave device corresponding to the first data.

In some embodiments, transmitting the application data further includes: transmitting the application data using an interface between a protocol stack corresponding to the application data and the plurality of slave devices.

In some embodiments, the process 400 further includes: notifying, using a protocol stack corresponding to the application data, the client of a transmission result of the application data.

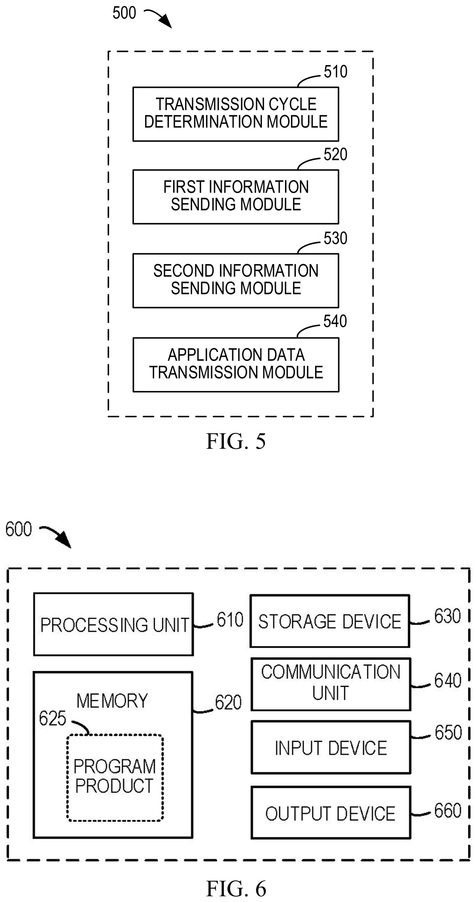

FIG. 5 illustrates a block diagram of an apparatus 500 for data transmission according to some embodiments of the present disclosure. The apparatus 500 may be implemented, for example, in the master device 121. The various modules/components in the apparatus 500 may be implemented by hardware, software, firmware, or any combination thereof.

The apparatus 500 includes a transmission cycle determination module 510 configured to determine, in response to receiving a request for application data from a client, a transmission cycle for transmitting the application data. The apparatus 500 further includes a first information sending module 520 configured to send, via a master device, first process data object information to a plurality of slave devices within a first time window of the transmission cycle, the first process data object information indicating a control operation of the master device for the plurality of slave devices. The apparatus 500 further includes a second information sending module 530 configured to send, via the master device, synchronization information to the plurality of slave devices within a second time window of the transmission cycle, to enable the plurality of slave devices to send second process data object information to the master device, the second process data object information at least indicating a response of the plurality of slave devices to the control operation. The apparatus 500 further includes an application data transmission module 540 configured to transmit the application data to the client to respond to the request within at least one time window of the transmission cycle other than the first time window and the second time window.

In some embodiments, the apparatus 500 further includes: a first category division module configured to divide the requested application data into a plurality of categories of data, where transmission priorities of the plurality of categories of data are different from each other, and the at least one time window includes a plurality of time windows respectively corresponding to the plurality of categories of data. The application data transmission module 540 further includes: a category data transmission module configured to transmit, to the client, a category of data corresponding to a time window of the plurality of time windows within the time window.

In some embodiments, the first category division module includes: a state determination module configured to determine whether the plurality of slave devices are in a startup state; and a second category division module configured to divide the application data into the plurality of categories of data in response to the plurality of slave devices being in the startup state, each of the plurality of categories of data being stored by at least one slave device of the plurality of slave devices.

In some embodiments, the apparatus 500 further includes: a classification storage module configured to store each category of data of the plurality of categories of data, each category of data being stored in a queue based on a device identifier of corresponding at least one slave device; a queue generation module configured to generate, for each category of data, a queue for the category of data based on the device identifier of the at least one slave device corresponding to the category of data, to obtain a plurality of queues respectively corresponding to the plurality of categories of data, and the application data transmission module 540 further includes: a data scheduling module configured to retrieve the plurality of categories of data from the plurality of queues in sequence based on predetermined transmission priorities; and a data transmission module configured to transmit data corresponding to each time window within the plurality of time windows in sequence.

In some embodiments, the data scheduling module includes: a protocol stack determination module configured to determine whether a protocol stack corresponding a first category of data of the plurality of categories of data is idle; a token determination module configured to determine whether a number of a set of tokens allocated to the first category of data for data transmission is sufficient to transmit the first category of data; and a first category data scheduling module configured to, in response to the protocol stack corresponding to the first category of data being idle and the number of the set of tokens being sufficient, retrieve the first category of data from a queue corresponding to the first category of data among the plurality of queues.

In some embodiments, the first category data scheduling module includes: a token allocation module configured to allocate the set of tokens to the first category of data; and a first data scheduling module configured to retrieving, using a plurality of tokens in the set of tokens, first data of the first category of data from a first slave device of the at least one slave device corresponding to the first data.

In some embodiments, the application data transmission module 540 further includes an interface data transmission module configured to transmit the application data using an interface between a protocol stack corresponding to the application data and the plurality of slave devices.

In some embodiments, the apparatus 500 further includes: a protocol stack data transmission module configured to notify, using a protocol stack corresponding to the application data, the client of a transmission result of the application data.

The units included in the apparatus 500 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the units in the apparatus 500 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

FIG. 6 illustrates a block diagram of an electronic device 600 in which one or more embodiments of the present disclosure may be implemented. It should be understood that the electronic device 600 illustrated in FIG. 6 is merely illustrative and should not constitute any limitation on the functionality and scope of the embodiments described herein. The electronic device 600 shown in FIG. 6 may be configured to implement the master device 121 in FIG. 1.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and capable of performing various processes according to programs stored in the memory 620. In a multiprocessor system, a plurality of processing units execute computer-executable instructions in parallel to improve the parallel processing capability of the electronic device 600.

The electronic device 600 generally includes a plurality of computer storage media. Such media may be any available media accessible to the electronic device 600, including, but not limited to, volatile and non-volatile media, removable and non-removable media. The memory 620 may be a volatile memory (e.g., a register, a cache, a random access memory (RAM)), a non-volatile memory (e.g., a read-only memory (ROM), an electrically erasable programmable read-only memory (EEPROM), or a flash memory), or some combination thereof. The storage device 630 may be a removable or non-removable medium and may include a machine-readable medium, such as a flash drive, a magnetic disk, or any other medium, which may be capable of storing information and/or data (e.g., training data for training) and may be accessed within the electronic device 600.

The electronic device 600 may further include additional removable/non-removable, volatile/non-volatile storage media. Although not shown in FIG. 6, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 620 may include a computer program product 625 having one or more program modules configured to perform various methods or actions of various embodiments of the present disclosure.

The communication unit 640 is configured to communicate with another electronic device through a communication medium. Additionally, the functionality of components of the electronic device 600 may be implemented in a single computing cluster or multiple computing machines capable of communicating through communication connection. Thus, the electronic device 600 may operate in a networked environment using logical connections with one or more other servers, network personal computers (PCs), or another network node.

The input device 650 may be one or more input devices, such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, the external device such as a storage device, a display device, etc., communicates with one or more devices that enable a user to interact with the electronic device 600, or communicates with any device (e.g., a network card, a modem, etc.) that enables the electronic device 600 to communicate with one or more other electronic devices. Such communication may be performed via an input/output (I/O) interface (not shown).

According to example implementations of the present disclosure, there is provided a computer-readable storage medium having one or more computer instructions stored thereon, where one or more computer instructions are executed by a processor to implement the method described above. According to example implementations of the present disclosure, a computer program product is further provided. The computer program product is tangibly stored on a non-transitory computer-readable medium and includes computer-executable instructions, and the computer-executable instructions are executed by a processor to implement the method described above.

Aspects of the present disclosure are described herein with reference to flowchart(s) and/or block diagram(s) of method(s), apparatus(es) (system(s)), and computer program product(s) implemented according to the present disclosure. It should be understood that each block of the flowchart(s) and/or block diagram(s), and combination(s) of blocks in the flowchart(s) and/or block diagram(s), may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart(s) and/or block diagram(s). These computer-readable program instructions may also be stored in a computer-readable storage medium and cause the computer, the programmable data processing apparatus, and/or other devices to work in a particular manner, such that the computer-readable medium storing instructions includes an article of manufacture including instructions to implement aspects of the functions/acts specified in the flowchart(s) and/or block diagram(s).

The computer-readable program instructions may also be loaded onto a computer, other programmable data processing apparatus, or other apparatus, such that a series of operational steps are performed on a computer, other programmable data processing apparatus, or other apparatus to produce a computer-implemented process such that the instructions executed on the computer, other programmable data processing apparatus, or other devices implement the functions/acts specified in one or more blocks of the flowchart(s) and/or block diagram(s).

The flowchart(s) and block diagram(s) in the figures show architecture, functionality, and operation of possible implementations of systems, methods, and computer program products according to various implementations of the present disclosure. In this regard, each block in the flowchart(s) or block diagram(s) may represent a system, a program segment, or a portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagram(s) and/or flowchart(s), as well as combination(s) of blocks in the block diagram(s) and/or flowchart(s), may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method (400) of data transmission, comprising:
determining (410), in response to receiving a request for application data from a client, a transmission cycle for transmitting the application data;
sending (420), via a master device, first process data object information to a plurality of slave devices within a first time window of the transmission cycle, the first process data object information indicating a control operation of the master device for the plurality of slave devices;
sending (430), via the master device, synchronization information to the plurality of slave devices within a second time window of the transmission cycle, to enable the plurality of slave devices to send second process data object information to the master device, the second process data object information at least indicating a response of the plurality of slave devices to the control operation; and
transmitting (440) the application data to the client to respond to the request within at least one time window of the transmission cycle other than the first time window and the second time window.

2. The method (400) of claim 1, further comprising:
dividing the requested application data into a plurality of categories of data, wherein transmission priorities of the plurality of categories of data are different from each other, and the at least one time window comprises a plurality of time windows respectively corresponding to the plurality of categories of data, and
wherein transmitting (440) the application data to the client comprises:
transmitting, to the client, a category of data corresponding to a time window of the plurality of time windows within the time window.

3. The method (400) of claim 2, wherein dividing the requested application data into the plurality of categories of data comprises:
determining whether the plurality of slave devices are in a startup state; and
dividing the application data into the plurality of categories of data in response to the plurality of slave devices being in the startup state, each of the plurality of categories of data being stored by at least one slave device of the plurality of slave devices.

4. The method (400) of claim 3, further comprising:
storing each category of data of the plurality of categories of data, each category of data being stored in a queue based on a device identifier of corresponding at least one slave device; and
generating, for each category of data, a queue for the category of data based on the device identifier of the at least one slave device corresponding to the category of data, to obtain a plurality of queues respectively corresponding to the plurality of categories of data,
wherein transmitting (440) the application data comprises:
retrieving the plurality of categories of data from the plurality of queues in sequence based on predetermined transmission priorities; and
transmitting data corresponding to each time window within the plurality of time windows in sequence.

5. The method (400) of claim 4, wherein retrieving the plurality of categories of data from the plurality of queues comprises:
determining whether a protocol stack corresponding to a first category of data of the plurality of categories of data is idle;
determining whether a number of a set of tokens allocated to the first category of data for data transmission is sufficient to transmit the first category of data; and
retrieving the first category of data from a queue corresponding to the first category of data among the plurality of queues in response to the protocol stack corresponding to the first category of data being idle and the number of the set of tokens being sufficient.

6. The method (400) of claim 5, wherein retrieving the first category of data from the queue corresponding to the first category of data among the plurality of queues comprises:
allocating the set of tokens to the first category of data; and
retrieving, using a plurality of tokens in the set of tokens, first data of the first category of data from a first slave device of the at least one slave device corresponding to the first data.

7. The method (400) of claim 1, wherein transmitting (440) the application data further comprises:
transmitting the application data using an interface between a protocol stack corresponding to the application data and the plurality of slave devices.

8. The method (400) of claim 1, further comprising:
notifying, using a protocol stack corresponding to the application data, the client of a transmission result of the application data.

9. A apparatus (500) for data transmission, comprising:
a transmission cycle determination module (510) configured to determine, in response to receiving a request for application data from a client, a transmission cycle for transmitting the application data;
a first information sending module (520) configured to send, via a master device, first process data object information to a plurality of slave devices within a first time window of the transmission cycle, the first process data object information indicating a control operation of the master device for the plurality of slave devices;
a second information sending module (530) configured to send, via the master device, synchronization information to the plurality of slave devices within a second time window of the transmission cycle, to enable the plurality of slave devices to send second process data object information to the master device, the second process data object information at least indicating a response of the plurality of slave devices to the control operation; and
an application data transmission module (540) configured to transmit the application data to the client to respond to the request within at least one time window of the transmission cycle other than the first time window and the second time window.

10. A system for data transmission, comprising:
a master device;
a plurality of slave devices; and
a processor and a memory storing computer-executable instructions that, when executed by the processor, cause the system to perform the method (400) of any one of claims 1 to 8.

11. An electronic device (600), comprising:
at least one processing unit; and
at least one memory coupled to the at least one processing unit and storing instructions for execution by the at least one processing unit, the instructions, when executed by the at least one processing unit, causing the electronic device to perform the method (400) of any one of claims 1 to 8.

12. A computer-readable storage medium having a computer program stored thereon, wherein the computer program is executable by a processor to implement the method (400) of any one of claims 1 to 8.
